# EUROPEAN PATENT APPLICATION

(11) **EP 1 502 835 A1**
(43) Date of publication of application: **02.02.2005**
(21) Application number: 04077005.9
(22) Date of filing: 09.07.2004
(51) Int. Cl.: B62D 1/06, B60R 16/02

(54) **Method and apparatus for accessing vehicle systems**

(30) Priority: 24.07.2003 US 489614 P; 20.02.2004 US 546537 P
(71) Applicant: Delphi Technologies, Inc., Troy, MI 48007 (US)
(72) Inventor: Worrell, Barry Christian, Centerville, OH 45458 (US); Ryan, Shawn Gregory, Dayton, OH 45410 (US); Heizer, Scott L., Middletown, OH 45042 (US); Balci, Rana, Troy, MI 48098 (US); Zhang, Lijian, Troy, MI 48098 (US)
(74) Representative: Denton, Michael John

(57) **Abstract**

A control interface (18) for accessing a plurality of systems of a vehicle, comprising: a first control interface (22) disposed on a surface of a steering wheel (16); a second control interface (24) disposed on a surface of a steering wheel, the second control interface being positioned remote from the first control interface; a visual display (20) disposed within the vehicle, wherein the first control interface provides access to a vehicle system and the second control interface provides a means for modifying the state of the vehicle system access by the first control interface.

## Description

### TECHNICAL FIELD

The present invention is related generally to a method and apparatus for accessing and controlling vehicle systems. More particularly, a method and apparatus for providing a means or a control interface for accessing, controlling and modifying the state of vehicle systems.

### BACKGROUND

As vehicles become more complex there is a corresponding increase in operating systems required for operation of the vehicle, vehicle systems and subsystems. In addition, other optional systems are being added to the vehicle wherein each of these optional systems adds another control system or operator interface in order to modify the operation of the system. For example, communication devices such as cell phones and navigational systems will become as common as radios, climate controls and cruise control. Additionally, many vehicles are now equipped with DVD devices or entertainment systems that are viewable by occupants of the vehicle. Thus, many systems are being implemented into the vehicle.

Each of the aforementioned systems generally comprises an operational interface for powering up the device and modifying its operational status. For example, a radio in its most general sense would typically have a power control, a volume control and a selector control for tuning in different radio stations. Typically, these controls were associated with the radio which was remote from the steering wheel. Moreover, and as more options became available to the radio (e.g., stationed pre-selects, digital clocks, AM/FM, cassette tapes, compact discs, etc.), the controls became more complex. In addition, as each system becomes part of the vehicle's overall system multiple control interfaces are provided and the control interfaces may be positioned throughout the vehicle interior. Accordingly, it is desirable to provide the vehicle operator with a means for easily accessing the multitude of vehicle systems in a manner most convenient to the vehicle operator. In addition, it is also desirable to provide other occupants with access to the same systems without duplicating the required control interface.

An example of one such system is described in commonly owned and assigned United States Patent 6,571,154, the contents of which are incorporated herein by reference thereto.

### SUMMARY OF THE INVENTION

Disclosed herein are apparatus and methods for accessing and controlling vehicle systems. In one embodiment, a control interface is provided for accessing a plurality of systems of a vehicle. The control interface comprising: a first control interface disposed on a surface of a steering wheel; a second control interface disposed on a surface of a steering wheel, the second control interface being positioned remote from the first control interface; a visual display disposed within the vehicle, wherein the first control interface provides access to a vehicle system and the second control interface provides a means for modifying the state of the vehicle system access by the first control interface.

A steering wheel for a vehicle, comprising: a first control interface for accessing a plurality of vehicle subsystems; a second control interface for modifying one of the plurality of vehicle subsystems after they are accessed by the first control interface; and a visual display for indicating which one of the plurality of vehicle subsystems has been accessed by the first control interface.

A method for activating and providing inputs to a plurality of control systems in a vehicle, comprising: providing a plurality of discrete selector switches for selecting a discrete control algorithm of a system of the vehicle, the plurality of discrete selector switches being disposed on a surface of a steering wheel; providing a visual display, the visual display indicating which control algorithm has been selected by one of the plurality of discrete selectors switches; and providing a scroll switch on a surface of the steering wheel wherein rotation of the scroll switch provides an input into the control algorithm selected by one of the plurality of discrete selector switches, the input modifying an operational status of a device controlled by the selected control algorithm.

A method for activating and providing inputs to a plurality of control systems in a vehicle, comprising: providing a plurality of discrete selector switches for selecting a discrete control algorithm of a system of the vehicle, the plurality of discrete selector switches being disposed on a surface of a steering wheel; providing a visual display in a portion of a rim of the steering wheel of the vehicle, the visual display indicating which control algorithm has been selected by one of the plurality of discrete selectors switches; and providing a means on a surface of the steering wheel for providing an input into the control algorithm selected by one of the plurality of discrete selector switches, the input modifying an operational status of a device controlled by the selected control algorithm.

A method for providing a user interface between a plurality of vehicle systems of a vehicle, each of the plurality of vehicle systems having a plurality of operational states, the method comprising: providing a first control interface disposed on a surface of a steering wheel, the first control interface having a plurality of discrete selector switches for selecting a discrete control algorithm of one of the plurality of vehicle systems, the plurality of discrete selector switches being disposed on a surface of the steering wheel; providing a second control interface on a surface of the steering wheel, the second control interface providing an input into the control algorithm selected by one of the plurality of discrete selector switches, the input modifying an operational status of a device controlled by the selected control algorithm; and providing a visual display in a portion of a rim of the steering wheel of the vehicle, the visual display indicating which control algorithm has been selected by one of the plurality of discrete selectors switches.

The above-described and other features and advantages of the present invention will be appreciated and understood by those skilled in the art from the following detailed description, drawings, and appended claims.

### BRIEF DESCRIPTION OF THE DRAWINGS

Figure 1 is a partial view of a vehicle interior;
Figure 2 is a top or front view of a steering wheel with a control interface in accordance with an embodiment of the present invention;
Figure 3A is a top or front view of a control interface in accordance with an embodiment of the present invention;
Figure 3B is a top or front view of a control interface in accordance with an alternative embodiment of the present invention;
Figure 3C is a top or front view of a control interface in accordance with another alternative embodiment of the present invention;
Figure 3D is a top or front view of a control interface in accordance with another alternative embodiment of the present invention;
Figure 4A is a top or front view of a control interface in accordance with an embodiment of the present invention;
Figure 4B is a top or front view of a control interface in accordance with an alternative embodiment of the present invention;
Figure 4C is a top or front view of a control interface in accordance with another alternative embodiment of the present invention;
Figure 4D is a top or front view of a control interface in accordance with another alternative embodiment of the present invention;
Figure 5 is a partial view of a vehicle interior with a control interface in accordance with an alternative exemplary embodiment of the present invention;
Figure 6 is a top perspective view of a steering wheel constructed in accordance with an alternative exemplary embodiment of the present invention;
Figure 7 illustrates a partial side perspective view of the embodiment of Figure 6;
Figure 8 is a top plan view of a portion of the steering wheel constructed in accordance with the embodiment of Figure 6;
Figure 9 is a view along lines 9-9 of Figure 8;
Figure 10 is a top plan view of a portion of the steering wheel constructed in accordance with the embodiment of Figure 6 illustrating functional aspects of an exemplary embodiment;
Figure 11 is a view of a steering wheel insert contemplated for use in an exemplary embodiment of the present invention;
Figure 12 is a schematic view of a portion of a control algorithm of an audio control system contemplated for use in an exemplary embodiment of the present invention;
Figure 13 is a schematic view of a portion of a control algorithm of a HVAC or climate control system contemplated for use in an exemplary embodiment of the present invention;
Figure 14 is a schematic view of a portion of a control algorithm of a cell phone or vehicle communications control system contemplated for use in an exemplary embodiment of the present invention;
Figure 15 is a schematic view of a portion of a control algorithm of a navigation control system contemplated for use in an exemplary embodiment of the present invention;
Figure 16 is a schematic view of a portion of a control algorithm of a wiper control system contemplated for use in an exemplary embodiment of the present invention;
Figure 17 is a schematic view of a portion of a control algorithm of a lighting control system contemplated for use in an exemplary embodiment of the present invention;
Figure 18 is a schematic view of a portion of a control and visual interface contemplated for use in an alternative exemplary embodiment of the present invention;
Figure 19 is a schematic view of a portion of a control and visual interface contemplated for use in an alternative exemplary embodiment of the present invention;
Figure 20 is a schematic view of a portion of a control and visual interface contemplated for use in an alternative exemplary embodiment of the present invention;
Figure 21 is a schematic view of a portion of a control and visual interface contemplated for use in an alternative exemplary embodiment of the present invention;
Figure 22 is a schematic view of a portion of a control and visual interface contemplated for use in an alternative exemplary embodiment of the present invention;
Figure 23 is a schematic view of a portion of a control and visual interface contemplated for use in an alternative exemplary embodiment of the present invention;
Figures 24A-25 illustrate portions of a control interface contemplated in accordance with an alternative exemplary embodiment of the present invention; and
Figure 26 illustrates a menu or graphical interface contemplated for use in any of the embodiments of the present invention.

### DETAILED DESCRIPTION OF EXEMPLARY EMBODIMENTS

Disclosed herein is a method and apparatus for providing a vehicle operator with a means for controlling vehicle systems and subsystems by operating a control interface or control system disposed on a surface of a steering wheel. The control interface allows a vehicle operator to provide inputs into operating systems and/or subsystems of the vehicle.

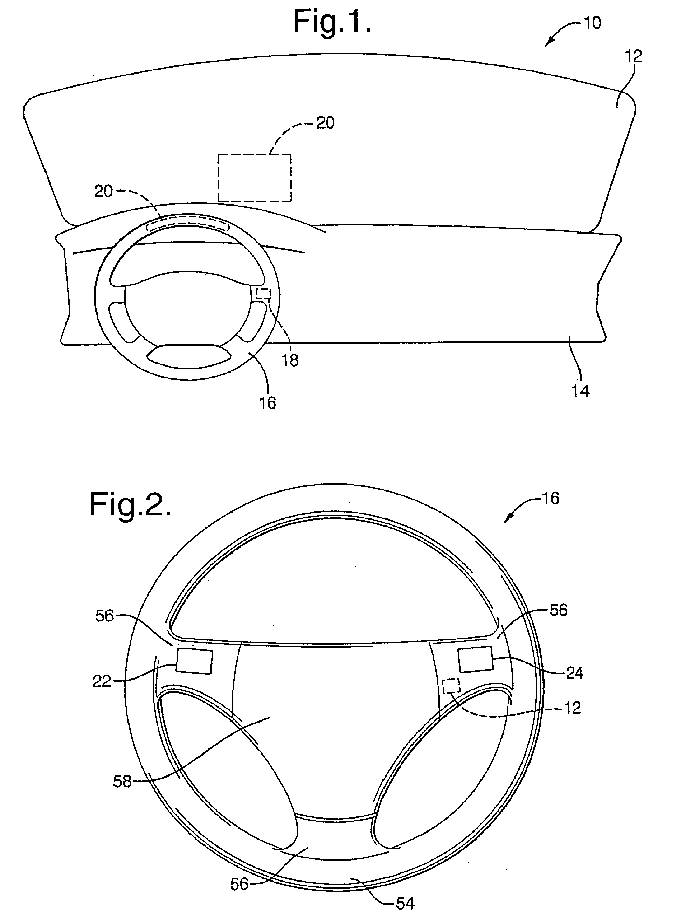

Referring now to Figure 1, a portion of a vehicle interior 10 is illustrated. Vehicle interior 10 comprises a windshield 12, an instrument panel or interior surface 14 and a steering wheel 16. In accordance with an exemplary embodiment of the present invention, steering wheel 16 has at least one control interface 18 disposed on an upper surface of the steering wheel. As will be discussed herein control interface 18 may be disposed on either side (e.g., left and right) of the steering wheel or alternatively the control interface may comprise actuators and devices disposed on both sides of the steering wheel and it is understood that the present invention may include more than two control interfaces and the location of the control interfaces may also include locations (e.g., single or multiple) on the lower side of the steering wheel. Furthermore, and as will be discussed herein each control interface may comprise a plurality of actuatable items (e.g., switches, buttons, scroll switches, etc.).

In addition, and in accordance with various exemplary embodiments, the control interface is contemplated for use with a means for providing a visual display 20, which may be disposed anywhere in the vehicle. Visual display 20 provides a graphical user interface for providing feedback to the operator as the system is operated. For example, and as illustrated by the dashed lines in Figure 1 the visual display may be disposed anywhere on the vehicle windshield, preferably in a location easily observed by the vehicle operator without distracting the same. In addition, and in accordance with another exemplary embodiment the visual display is located in a portion of the steering wheel rim. It is, of course, understood that the visual display may also be located in other areas of the vehicle for example on the vehicle dashboard. It is also understood that a single visual display may be provided either in the rim of the steering wheel or in a centrally located position on the vehicle instrument panel or anywhere else within the vehicle as long as the vehicle operator is able to easily see the visual display screen. It is also understood that multiple visual displays in multiple locations may be provide. It is also understood that any one of the aforementioned embodiments may be used with an audio voice feed back wherein pre-recorded messages are played for the operator as the user accesses the control interface of the present invention. It is also contemplated that exemplary embodiments comprise a control interface without visual and audio feedback to the operator. In exemplary embodiments the visual display will provide indicia or test indicating the operational status of the system and the selections made or required input. In one embodiment the text or indicia crawls or scrolls from left to right continuously until a new input is received.

Referring now to Figure 2, a portion of steering wheel 16 is illustrated. Here the control interfaces are further defined and illustrated as a left control interface 22 and a right control interface 24. In accordance with an exemplary embodiment left control interface 22 and right control interface 24 are each configured to have five (5) discrete different switches, buttons or other equivalent items for providing five different inputs into the system being accessed by the control interfaces. In other words each interface is configured to provide five different types of inputs.

Moreover, and in accordance with an alternative exemplary embodiment left control interface 22 is interchangeable with right control interface and vice versa. Thus, the features or available features of either interface may be repositioned on either side of the steering wheel in accordance with user preference (e.g., left or right handed). It is of course understood that the number of inputs capable of being provided by each of these interfaces may be greater or less than 5 and that the Figures and following description provide an example of one contemplated embodiment. For example, as will be discussed herein a control interface on the top surface of the steering wheel will comprise multiple buttons for providing inputs wherein a scroll switch or other equivalent item is disposed on the lower surface of the steering wheel for manipulation by the vehicle operator.

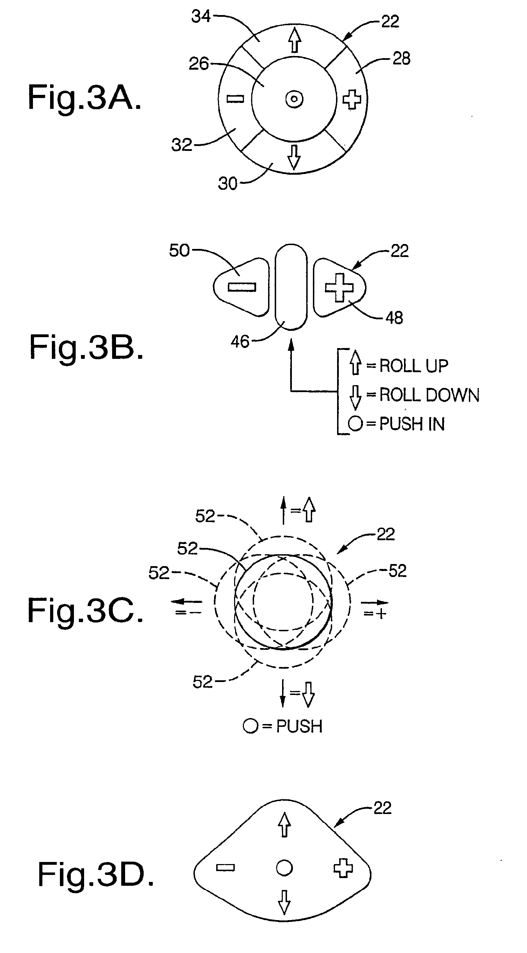

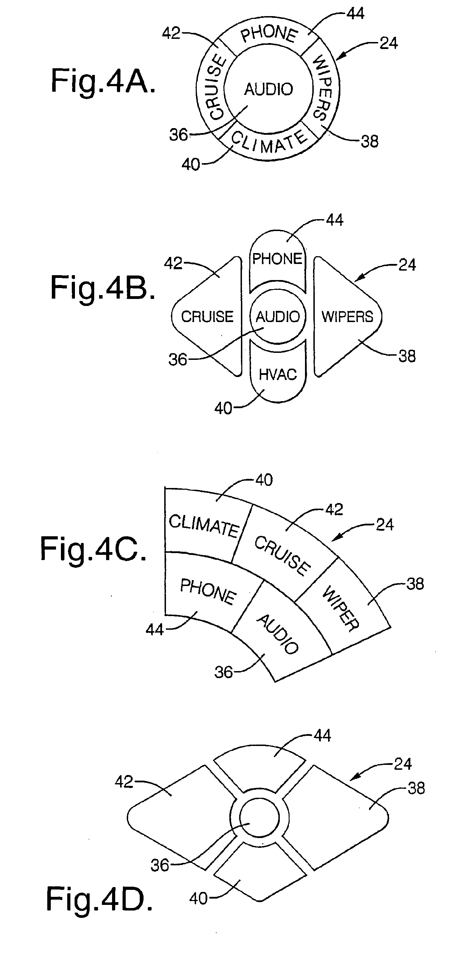

Referring now to Figures 3A-3D and Figures 4A-4D, alternative configurations of control interfaces 22 and 24 are illustrated. For example, Figure 3A illustrates one exemplary embodiment of a control interface 22 wherein the interface is a pod of switches defined by a circular or non-circular periphery (e.g., oval, elliptical, rectangle etc.) and a center switch 26 or pushbutton is surrounded by four other push buttons or switches 28, 30, 32 and 34. In an exemplary embodiment the five inputs of interface 22 will be labeled as follows: up, down, plus, minus and zero. Symbolically, these will be referred to as "↑", "↓", "+", "-" and "0" and refer to switches 34, 30, 28, 32 and 26 respectively.

Referring now to Figure 4A, control interface 24 is illustrated and is similar to control interface 22. Control interface 24 is also a pod of switches defined by a circular or non-circular periphery and a center switch 36 or pushbutton is surrounded by four other push buttons or switches 38, 40, 42 and 44. In an exemplary embodiment the five inputs of interface 24 will be labeled as follows: audio, wipers, climate, cruise and phone, respectively. It is understood that these features may be rearranged or replaced depending upon the users particular preferences or evolution of the vehicle designs. For example, the most used input may be arranged for the center switch or button for ease of access and as the user of the vehicle develops personal preferences the configuration may be changed. In accordance with an alternative exemplary embodiment systems accessed by control interface 24 may be reprogrammed by the vehicle operator by acquiring and installing the appropriate software and/or a database of machine-readable code. In addition, the particular configuration of the buttons of control interface 24 may be modified by reprogramming the interface (e.g., uploading new data wherein functions of the buttons are changed).

In accordance with exemplary embodiments a set of buttons are used to control a multitude of functions. In accordance with one embodiment, the operator pushes the audio button once (e.g., button 36 of control interface 24) and the display reads volume or alternatively the prerecorded message says volume. The prerecorded message may be used instead of the visual display or in addition to the visual display. Once the driver or operator knows they are in the audio command prompt (e.g., pressing audio button and hearing and/or seeing "volume") the operator can use control interface 22 to adjust the volume by manipulating switches 28 and 32. A second mode of the audio button is provided wherein the audio button is manipulated twice, which will bring the user to another sub-level or second-tier of the audio control system wherein the display reads "preselect" or alternatively the prerecorded message says "preselect". Again, the prerecorded message may be used instead of the visual display or in addition to the visual display. Once the driver or operator knows they are in the "preselect" command prompt control interface 22 may be used to preselect favorite radio stations.

A third mode of operation is provided by manipulating or depressing the audio button three times, which will bring the user to another sub-level of the control system wherein the display reads "source" or alternatively the prerecorded message says "source". Again, the prerecorded message may be used instead of the visual display or in addition to the visual display. Once the driver or operator knows they are in the "source" command prompt control interface 22 may be used to move through the options available to audio source such as AM, FM, Cassette tape, CD player, DVD player etc. It is also noted that additional modes of operation may be used with each of the aforementioned buttons of control interface 24.

A similar control system is provided for all of the other vehicle sub-systems including but not limited to heating ventilating and air conditioning system, windshield wipers (front and rear), cell phone operation, ect.

Referring now to Figure 3B an alternative configuration of control interface 22 is illustrated. Here the five inputs are provided by a central scroll switch 46 which is capable of being rotated up and down to provide the inputs of buttons 30 and 34 of the Figure 3A embodiment and is also capable of being depressed centrally to provide the input of button 26 of the Figure 3A embodiment. Disposed on either side of scroll switch 46 is a pair of buttons or inputs devices 48 and 50 capable of providing the inputs of switches 28 and 32 of the Figure 3A embodiment.

Referring now to Figure 3C yet another alternative configuration of control interface 22 is illustrated, here the five inputs are provided by a central joy stick 52 which is capable of being manipulated into the four positions illustrated by the dashed lines and corresponding to the inputs of buttons 28, 20, 32 and 34 of the Figure 3A embodiment and joy stick 52 is also capable of being depressed centrally to provide the input of button 26 of the Figure 3A embodiment.

Figure 3-D illustrates a rocker type switch capable of being centrally depressed and moved up and down and left and right in order to provide the desired inputs.

Figures 4B-4D illustrate alternate configurations of control interface 24 wherein the five buttons or actuatable devices are arranged in alternate configurations, which may correspond to the steering wheel design or alternatively match one of the configurations of control interface 22.

As illustrated in Figure 2, steering wheel 16 includes a rim portion 54 having a plurality of spoke portions 56. Spoke portions 56 connect rim portion 54 to a center portion 58. In accordance with exemplary embodiments, system interfaces 22 and 24 are located proximate to the rim portion for actuation with an individual's thumb as they are grasping steering wheel 16. Thus, system interfaces 22 and 24 are oriented for ease of manipulation while steering wheel 16 is in an unturned or center position corresponding to a position in which the steerable wheels of a vehicle are positioned to cause the vehicle to be traveling in a substantially straight direction. Accordingly, the control interfaces are easily actuatable while a vehicle is traveling or coasting in a generally straight direction (e.g. non-turning driving conditions) or is at a stoplight or in a parked vehicle.

Steering wheel 16 and control interfaces 22 and 24 are contemplated for use in any vehicle having multiple operating systems for individually controlling the same. For example, other vehicles include but are not limited to the following: motor vehicles, aircraft; watercraft; automobiles; trucks; sports utility vehicles; motorcycles, all terrain vehicles and spacecraft etc.

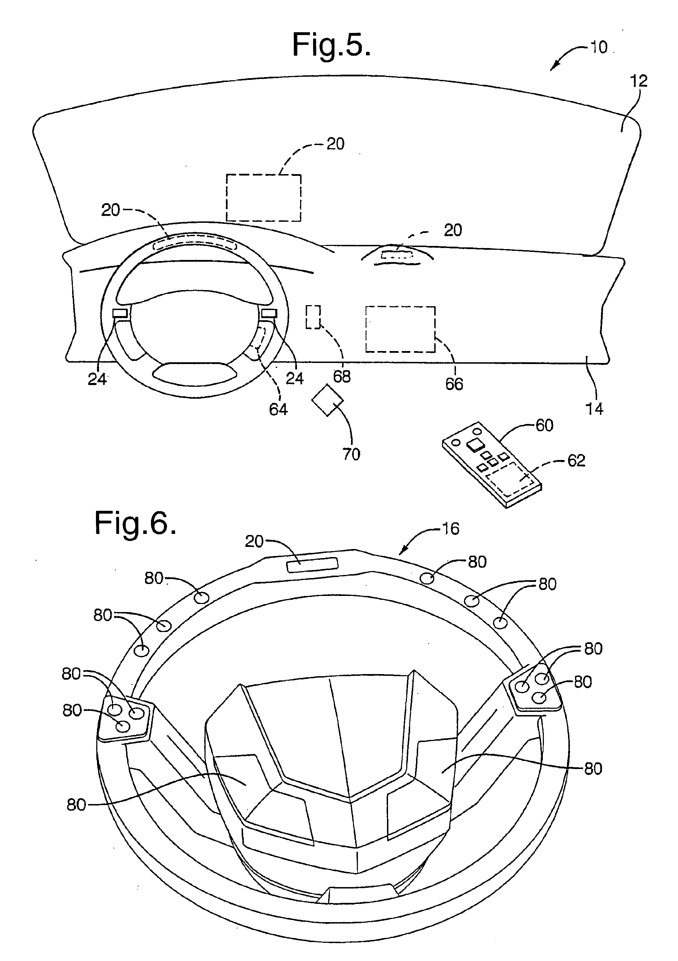

Referring now to Figure 5, an alternative exemplary embodiment of the present invention is illustrated. Here the vehicle system interface is provided by control interface 22, control interface 24 and a remote control 60 for access to non-driver critical vehicle functions such as climate control, radio, phone, navigational systems, etc. In this embodiment passenger seat or rear seat passengers will be able to control the non-driver critical functions without disturbing the vehicle operator. This system will allow the removal or elimination of all of the controls that are currently mounted on the instrument panel center stack or steering column stock.

Remote control 60 has a plurality of buttons or input means similar to the various embodiments of control interfaces 22 and 24. In accordance with this exemplary embodiment, a visual display 20 is positioned on top of an interior surface of the vehicle wherein the visual indicia may be viewed by the operator who is using or providing the inputs to remote control 60. Accordingly, and as the systems are accessed by remote control 60 visual indication is displayed on the vehicle instrument panel. It is also contemplated that this visual display will be activated when the systems are accessed by the control interfaces on the steering wheel. In other words, as the vehicle driver is accessing systems and changing their settings via inputs to the switches on the steering wheel the visual display on the instrument panel will allow the other passengers to also see what systems are being changed. Similarly, and as the passenger is accessing systems via the remote control the visual displays in this alternative embodiment may be disposed and activated on both the steering wheel and instrument panel thus, the driver is able to see via the steering wheel which systems are being modified by the passenger and vice versa. It is also understood that exemplary embodiments of the present invention contemplate any combinations of visual displays for both the driver and the passenger as well as remote control and steering wheel interfaces.

In addition, and as an alternative embodiment remote control 60 is also equipped with a visual display 62 and/or prerecorded audio text messages such that when remote control 60 is interfacing with the various systems on the vehicle only the remote control is providing visual and audio feedback to the user. Thus, operation of the system by the passenger is not noticed by the driver or alternatively, the system may be configured such that operation of remote control 60 by a passenger will be visually and audibly perceivable to the vehicle operator. In yet another alternative embodiment, simultaneous operation by remote control 60 and the control interfaces 22 and 24 disposed on the steering wheel will be configured such that the inputs from control interfaces 22 and 24 will always have priority over those from remote control 60. Furthermore, and in one embodiment, inputs to control interfaces 22 and 24 will always have priority over those from remote control 60.

An advantage of removing the control inputs from the center console allows the radio and other components to be removed from locations which are in close proximity to the HVAC ducts of the vehicle, which may subject them to excessive heat or wide temperature ranges. Accordingly, and through this embodiment passengers may control systems similar to using a remote control at home.

Control interfaces 22 and 24 allow a vehicle operator to engage and/or scroll through a plurality of menus of multiple operating systems resident upon a vehicle microprocessor or microprocessors. However, it may be necessary to provide the control interfaces of the steering wheel with multiple functions or additional buttons in order to ensure all of the controls of the center stack are eliminated.

Accordingly, and in this embodiment a rocker switch 64 is placed on the side of the steering wheel to change the mode from first group of functions to the second. Thus, the five buttons or functions of one control interface may now provide 10 functions. Of course, the number of buttons and functions may vary as necessary.

In accordance with one alternative exemplary embodiment, selection of a function by depressing one of the buttons of control interface 24 and subsequent manipulation of a scroll switch or rocker switch 64 will then cause all of the buttons of control interface 24 to assume or be capable of providing a discrete input corresponding to the selected function. For example, if the user selects audio and then subsequently thereafter the scroll switch is manipulated, each of the five buttons of control interface 24 are now reconfigured to provide input corresponding to the audio inputs (e.g., band selection, station selection, CD, volume, etc.). As shown it is contemplated that the rocker or scroll switch can be disposed on the lower or backside of the steering wheel, as well as being disposed on the upper surface. As will be discussed herein, the system will also be provided with a default mode wherein after a predetermined time period the system will revert back to the default or last mode selected. Moreover, the configurability of the system will allow the user to select the default mode.

Furthermore, the rocker switch may be disposed on any surface of the steering wheel. When the group of functions are changed from a first group to a second group, the labels for each control on the rim may be changed accordingly. Thus, the user knows which switch changes which function. The grouping of the functions can be done based on the similarity of the functions and frequency of usage.

Accordingly, the center area of the instrument panel can now be freed up to house a central storage compartment or other vehicle accessory such as a refrigerator 66. Also, the HVAC controller and radio can now be located in a remote location such as the trunk, console, under the seats or on the floor. It has long been desired by the makers of radios to get their radios away from sources of heat such as heater ducts or radiant heat which are presently close to the instrument panel surface and in particular travel through areas of the vehicle dashboard.

The benefit of re-locating the control function from the center console to a steering wheel mounted scroll switch and push button combination also includes "less time spent to adjust the control" and "keeping the vision on the road" The time needed to adjust a control on center console can be divided into time-to-reach, time-to-locate, and time-to-activate/adjust. Using steering wheel mounted control will eliminate time-to-reach, which has been shown to take from 0.31 to 0.77 seconds as referenced in publication no. J2365 (revision June 14, 2001), and potentially shorten time-to-locate. Also, since the controls are located on the steering wheel, the driver's vision (at least, peripheral vision) is still on the road.

This system of an exemplary embodiment of the present invention could also be reconfigurable, not only in one embodiment wherein the control interfaces are exchangeable, but the vehicle owner could simply download a selected driver interface from a website approved by the original equipment manufacturer (OEM) onto a flash card memory (such as a Sony Memory Stick or other equivalent device 70), wherein updated or modified machine readable code is provided to the system. The vehicle could then have a flash card reader that the driver plugs into the dash upon entering the vehicle. This flash card reader 68 would contain a database of machine-readable data including but not limited to the following information: maps (navigation system), cell phone directory, HVAC preferences, seat position, button function preferences (ie. Button 1= radio, Button 2 = heat, etc), preset music stations (XM radio, or regional AM/FM preferences), appointment alarms (downloaded from a computer device or personal digital assistant (PDA)). This flash card reader could also serve the purpose of a key that allows the operator to start the vehicle by simply plugging it in.

In yet another alternative vehicle system updates or user selected driver and/or passenger personal interface settings as mentioned above and herein are capable of being loaded into the vehicle operating systems using telematics. In other words, telematics will provide information, tailored to the specific vehicle interface requested by the driver. Thus, through the control interface of exemplary embodiment of the present invention telematics provides wireless communications with the vehicle wherein, software upgrades and software for reconfiguring the control interfaces of exemplary embodiments of the present invention is available. Examples of other types of information available through telematics includes but is not limited to the following: traffic conditions, driving directions, locating a lost or stolen vehicle, remote unlocking services, remote vehicle diagnostics.

When using the flash memory stick the same can be plugged in or synchronized with the vehicle operating system anywhere in the vehicle. A flash card reader could also facilitate remote diagnosis of the vehicle without the need for telematics. For example, if the drivers warning light comes on the information is automatically loaded onto the flash card installed in the vehicle. The driver then simply takes the flashcard with the downloaded information to a home computer with Internet access or the vehicle dealership and the information of the card is loaded onto the reader that feeds the information to a program that provides the trouble code or diagnostic. Alternatively this information could be sent via a cell phone to an OEM number that can take this information over the phone much like a fax machine or modem would transmit it. This later approach would require a built in cell phone interface such as blue tooth.

In another exemplary embodiment, the switches on the wheel rim could also be backlighted for use at night. Upon activation of a particular switch the switch could turn from its primary lighted color (such as red) to a different color (such as green) to indicate that that function is active. These lights could also serve as turn signal indicators.

For example when one is turning left (e.g., has manipulated the steering wheel into a left turn or has activated the left turn signal) the switches on the left could go into a blinking mode. Also these lights could provide the function of warning indicators. For example if the vehicle engine is overheating the lights could all turn red and start flashing. At the same time a visual display (e.g., liquid crystal display (LCD), light emitting diode (LED) or other equivalent means for providing information in a visual format in the steering wheel) would read the warning. This warning mode could be extended to alternative functions such as Adaptive cruise. For example, sensors disposed on the front of the vehicle determined that a distance between the front of the vehicle is within a predetermined or below an acceptable range (e.g., the driver gets too close to the car ahead of them or when rapid deceleration of the car ahead of them is sensed) the flashing lights could be activated.

In another exemplary embodiment, the switches on the wheel could be accompanied by haptics in the rim of the wheel. The haptics could provide a vibration alert of differing time-frequency patterns when various things happen. For example, if the vehicle is equipped with a phone and the phone rings a rapid pulse low amplitude signal is transmitted to a mass capable of being vibrated so that the steering wheel or a portion thereof is vibrated. Also, an adaptive cruise warning may be provided by a middle range pulse with a higher amplitude signal thus, the user will be able to differentiate between haptics associated with an incoming phone call and warnings from the adaptive cruise system.

Also, and in other alternative embodiments the buttons or haptics could have different shapes, color, tactile feels, kinesthetic cues or textures to help differentiate between them. As used herein haptics relates to tactile cues, kinesthetic cues or touching sensations (e.g., textures, vibrations, bumps, contours, shapes, sensations, resistance or lack thereof). For example, a non-limiting example of such haptics contemplated for use in exemplary embodiments of the present invention are those available from Immersion Corporation.

In alternative exemplary embodiments, the functions of these steering wheel mounted controls can also be extended to inter-vehicle communications, in conjunction with Internet, CR5 or OnStar services. For example, the control interface can select email messages, and the message can be displayed on HUD or read out via TTS (text-to-speech) technology, if equipped. Combined with HUD, the steering wheel mounted control interface can be used for in-vehicle navigation system. In addition, the combination of the control interface and push button can also serve as a dialing pad, if a build-in cell phone is equipped.

Control interfaces 22 and 24 are in an exemplary embodiment positioned approximately in the 3 o'clock and 9 o'clock positions. Of course, other locations are contemplated to be within the scope of the present invention. This offers the advantage of allowing electronic shift buttons to be placed on the opposite side of the wheel for optimal compatibility with such systems.

In accordance with one exemplary embodiment, the first set of controllers function primarily as quick select buttons for different primary modes. This set of buttons may be placed on either side of the wheel, but for purposes of description will be assumed to be in the 3 o'clock area and will be referred to as mode selection control. A variety of vehicle components may be adjusted via this controller, but for illustration purposes five modes will be described as follows: audio, phone, cruise, wipers, and climate. In addition to the five modes directly accessible, two additional modes related to the phone function are possible. These are the incoming call mode and the active call mode. A second set of controllers, described for illustrative purposes in the 9 o'clock area, will be referred to as the value control. The actions associated with the value control change depending on the active primary mode. This allows for a multitude of functions to be modified by a limited number of controllers.

An example of the logic for this system will now be described. As referred to herein logic comprises steps of an algorithm of machine-readable code so that functions may be performed. A feature of this system logic is that priority given to certain "default" modes. After a given period of time without driver input, the active mode will switch back to the last active default mode. For example, if the audio mode was the last active default mode and the driver selects the cruise, wiper, or climate mode, then after a period of time with no additional input the active mode will revert to audio automatically. This enables a more convenient control system for the driver. The incoming call mode is a special case triggered by an incoming call signal. This automatically switches the active mode to the incoming call mode except during an active call. In this case the incoming call is handled by typical call waiting logic. For the purposes of illustration the audio and active call modes will be considered default modes in the following description of the system logic. Also, the time interval for inactivity will be 10 seconds for the incoming call mode and 5 seconds for all other modes, but it should be appreciated that different time intervals may be applied to any mode. Specifics associated with each mode are described in the examples below:

| **INCOMING CALL MODE:** | |
|---|---|
| **Control Interface Actions** | Mute audio, play incoming call alert |
| **Up** | Unused |
| **Down** | Unused |
| **Plus** | Unused |
| **Minus** | Unused |
| **Zero** | Unused |
| **Phone** | Answer, switch to active call mode |
| **Audio** | Cancel incoming call, switch to audio mode |
| **Cruise** | Cancel incoming call, switch to cruise mode |
| **Wiper** | Cancel incoming call, switch to wiper mode |
| **Climate** | Cancel incoming call, switch to climate mode |
| **No Input** | After 10 seconds cancel incoming call, switch to last active default mode |

| **ACTIVE CALL MODE:** | |
|---|---|
| **Actions** | Enable transmit/receive |
| **Up** | Call volume increase |
| **Down** | Call volume decrease |
| **Plus** | Unused |
| **Minus** | Unused |
| **Zero** | Mute microphone |
| **Phone** | End call, switch to phone call mode (Switch to incoming call) |
| **Audio** | End call, switch to audio mode |
| **Cruise** | Switch to cruise mode |
| **Wiper** | Switch to wiper mode |
| **Climate** | Switch to climate mode |
| **No Input** | Remain in active call mode unless call has ended, if ended then switch to phone mode. |

| **PHONE MODE:** | |
|---|---|
| **Control Interface Actions** | Mute audio, play dialtone |
| **Up** | Scroll memory up or Number up |
| **Down** | Scroll memory down or Nunber down |
| **Plus** | Fast memory up or Space forward |
| **Minus** | Fast memory down or Space back |
| **Zero** | Toggle between Memory and Manual sub-modes NOTE: Memory sub-mode the default active sub-mode whenever phone mode activated. A save option or sub-mode may also be included when a number is entered manually. |
| **Phone** | Place call, switch to active call mode |
| **Audio** | Switch to audio mode |
| **Cruise** | Switch to cruise mode |
| **Wiper** | Switch to wiper mode |
| **Climate** | Switch to climate mode |
| **No Input** | After 5 seconds switch to last active default mode. |

| **AUDIO MODE:** | |
|---|---|
| **Control Interface Actions** | Volume soft start if previously off or in phone/call mode |
| **Up** | Volume up |
| **Down** | Volume down |
| **Plus** | Preset up (Hold: Seek up) or Preset up (Hold: Seek up) or Preset up (Hold: Channel up) or Disk select up or Track up (Hold: Search forward) or Track up (Hold: Search forward) |
| **Minus** | Preset down (Hold: Seek down) or Preset down (Hold: Seek down) or Preset down (Hold: channel down) or Disk select back or Track down (Hold: Search back) or Track down (Hold: Search back) |
| **Zero** | Toggle between FM, AM, XM, CD Changer, CD, Tape. NOTE: Audio sub-modes may vary significantly by application and may be reconfigured by end user. |
| **Phone** | Switch to phone mode |
| **Audio** | Toggles audio on/off |
| **Cruise** | Switch to cruise mode |
| **Wiper** | Switch to wiper mode |
| **Climate** | Switch to climate mode |
| **No Input** | Remain in audio mode |

| **CRUISE MODE:** | |
|---|---|
| **Control Interface Actions:** | If off, then turn cruise on |
| **Up:** | Increase speed when cruise on |
| **Down:** | Decrease speed when cruise on |
| **Plus:** | Resume |
| **Minus:** | Cancel |
| **Zero:** | Set |
| **Phone:** | Switch to phone mode |
| **Audio:** | Switches to audio mode |
| **Cruise:** | Reset timer |
| **Wiper:** | Switch to wiper mode |
| **Climate:** | Switch to climate mode |
| **No Input:** | After 5 seconds switch to last default mode |

| **WIPER MODE:** | |
|---|---|
| **Control Interface Actions** | Wipe 3 times if in Off or Auto |
| **Up** | Increase speed in delay mode only |
| **Down** | Decrease speed in delay mode only |
| **Plus** | Move forward in following list: Off, Auto (if available) Delay, Low, High |
| **Minus** | Move back in following list: Off, Auto (if available) Delay, Low, High |
| **Zero** | Spray |
| **Phone** | Switch to phone mode |
| **Audio** | Switches to audio mode |
| **Cruise** | Switch to cruise mode |
| **Wiper** | Wipe 3 times and reset timer |
| **Climate** | Switch to climate mode |
| **No Input** | After 5 seconds switch back to last default mode |

| **CLIMATE MODE:** | |
|---|---|
| **Control Interface Actions** | None |
| **Up** | Temperature up or Move forward in following list: Defrost, Defrost + Low, Low, Low + High, High |
| **Down** | Temperature down or Present up (Hold: Seek up) Move back in following list: Defrost, Defrost + Low, Low, Low + High, High |
| **Plus** | Increase fan speed setting: Off, Auto (if available), 1, 2, 3, 4, or Move forward in following list: A/C, Vent, Heat |
| **Minus** | Decrease fan speed setting: Off, Auto (if available), 1, 2, 3, 4 or Move back in following list: A/C, Vent Heat |
| **Zero** | Toggle between Level and Settings sub-modes NOTE: For vehicles w/ auto climate control it may be preferable to eliminate the settings sub-mode. The level sub-mode is the default whenever the climate mode is activated. Also, for vehicles w/ dual zones the temperature control may be the main or driver side only. |
| **Phone** | Switch to phone mode |
| **Audio** | Switch to audio mode |
| **Cruise** | Switch to cruise mode |
| **Wiper** | Switch to wiper mode |
| **Climate** | Resets timer |
| **No Input** | After 5 seconds switch to last default mode |

As illustrated above each subsystem has its own logic that provides further functions based upon the input received from the operator. The logic is executed by a machine-readable code or medium for executing the algorithms as well as receiving and prompting for the requited inputs. In yet another alternative, one control interface could comprise a scroll switch while the other is a pod of pushbuttons (e.g., control interfaces 22 or 24, as illustrated above in the various embodiments). This feature provides further adaptivity. Again, it is contemplated that the switches may be interchangeable, for example a driver who happens to be right handed wants the scroll switch on the right spoke, he or she simply plugs the scroll switch into the right hand spoke and the pod with the function select buttons onto the left hand spoke. In this embodiment an enter button or a centrally depressible portion of the scroll switch could also serves as a turn signal actuator.

In this embodiment, the right hand spoke scroll center switch would provide the means for activating the right turn signal and the left hand spoke scroll enter switch would provide the means for activating the left turn signal. In order to prevent accidental activation, and in yet another embodiment, a button 72 is positioned on either the front or back surface of the steering wheel and must be pressed with the users thumb or other finger while at the same time the scroll switch is being turned. In yet another alternative, the scroll switch can be moved in another dimension or direction (e.g., parallel to the face plane of the steering wheel) in order to differentiate the activation of turning signal from other switch functions.

In addition to or as an alternative to one of the aforementioned control interfaces the steering wheel could have a scroll switch or two scroll switches disposed on top of or under either or both the left hand and right hand spokes of the steering wheel. These scroll switches would then provide further available options to the system. In an exemplary embodiment, the scroll switch would be disposed below the other control interface thus, as inputs are received via the control interface disposed on the upper surface and manipulation of the scroll switch will provide further input to the selected system. Of course, numerous combinations are available and contemplated (e.g., two control interfaces on top and two scroll switches on the bottom or two control interfaces on top and one scroll switch on the bottom, or one control interface on top and two scroll switches on the bottom, or one control interface and one scroll switch either on top of each other or on opposite sides of the steering wheel, etc.).

Referring now to Figures 6-11 an alternative exemplary embodiment of the present invention is illustrated. Here steering wheel 16 is provided with a plurality of selection buttons that are disposed along the periphery of the steering wheel with a cluster of buttons at either the left hand spoke and/or the right hand spoke.

As illustrated, a visual display 20 is disposed in the rim. In one exemplary embodiment the visual display is a LCD that will show the selected system and the state or level the user is within the system. Alternatively, the visual display is a plurality of light emitting diodes (LEDs) or other equivalent means for providing information in a visual format. In addition, it is also noted that the aforementioned visual display is contemplated for use with or without an audio feedback as the user moves through the various systems of the vehicle. As an alternative embodiment, the visual display may be a head up display (HUD) or disposed on the instrument panel of the vehicle. Alternatively, the buttons are just positioned along the rim of the steering wheel (e.g., three buttons positioned on one side of the rim (left side) and three buttons position on the other side (right side) of the rim). Of course, the configuration, location and number of buttons positioned along the rim may vary. In yet another alternative exemplary embodiment, the visual display (e.g., LED, LCD or any other equivalent item) will provide a text message that scrolls across (e.g., left to right) the visual display in a continuous manner so that the vehicle operator may easily perceive the text message of the visual display.

In addition, and as an alternative some of the buttons may be disposed on the center portion or airbag module cover of the steering wheel. In addition, and as mentioned above scroll switches are contemplated for use with any of the embodiments of Figures 6-11. Here a scroll switch 82 or scroll switches is/are positioned on a lower surface of one of the spokes of the steering wheel. The scroll switch can provide inputs by centrally depressing the scroll switch as well as rotating the same about an axis.

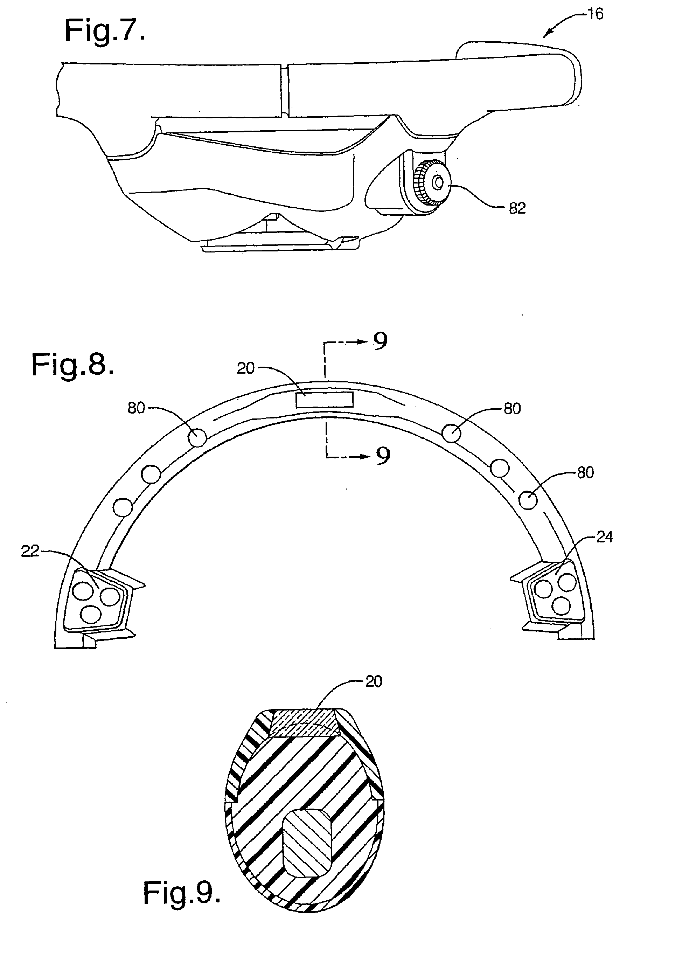

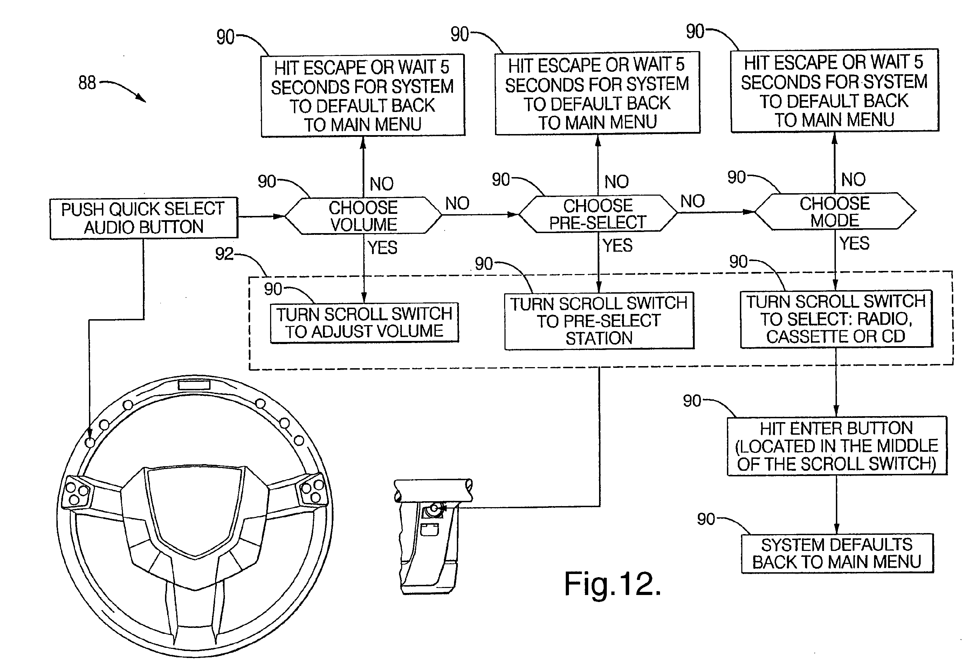

The scroll switches would then provide further adaptive features or reconfigureability of the system. Figure 9 illustrates the visual display (e.g., LED, LCD) disposed within a top portion of the steering wheel rim. In this embodiment the pushbutton or rim switches are used in conjunction with a scroll switch for example, first a user pushes a button on the rim. For example, far left button can be for audio, one push would bring up a volume control, two pushes would bring up radio stations selection, three pushes would bring up a CD player or other auxiliary device. In conjunction with this push button feature, an exemplary embodiment allows the user, once they are in the desired function, to change an aspect of that feature (e.g., volume, radio station, CD track, play or pause). In order to change the present aspect of the selected feature, the user then manipulates the scroll switch to make the adjustment of that function. If no input is received by the predetermined fault period then the system will back out of that function that is selected. If the user wants out of that function immediately hitting another button or the escape button would provide that feature. In one embodiment the scroll switch is located on the back of the right spoke of course this position may vary. For example, a pair of scroll switches is contemplated, wherein one scroll switch is disposed on the back side of the left spoke of the steering wheel and the other is disposed on the back side of the right spoke of the steering wheel. Thus, as an individual manipulates the quick select buttons on the front side of the steering wheel (e.g., facing the driver) the appropriately located scroll switches (e.g., left or right) are used to further manipulate the control systems in accordance with exemplary embodiments of the present invention. For example, depressing of buttons on either the left or right side of the steering wheel activates a menu and then rotation of the scroll switch below the depressed button provides further input. It is, of course, contemplated that the pair of scroll switches or a single scroll switch, disposed below the steering wheel, are contemplated for use in any of the embodiments disclosed herein. Examples of the types of inputs capable of being provided are illustrated in Figures 12-17.

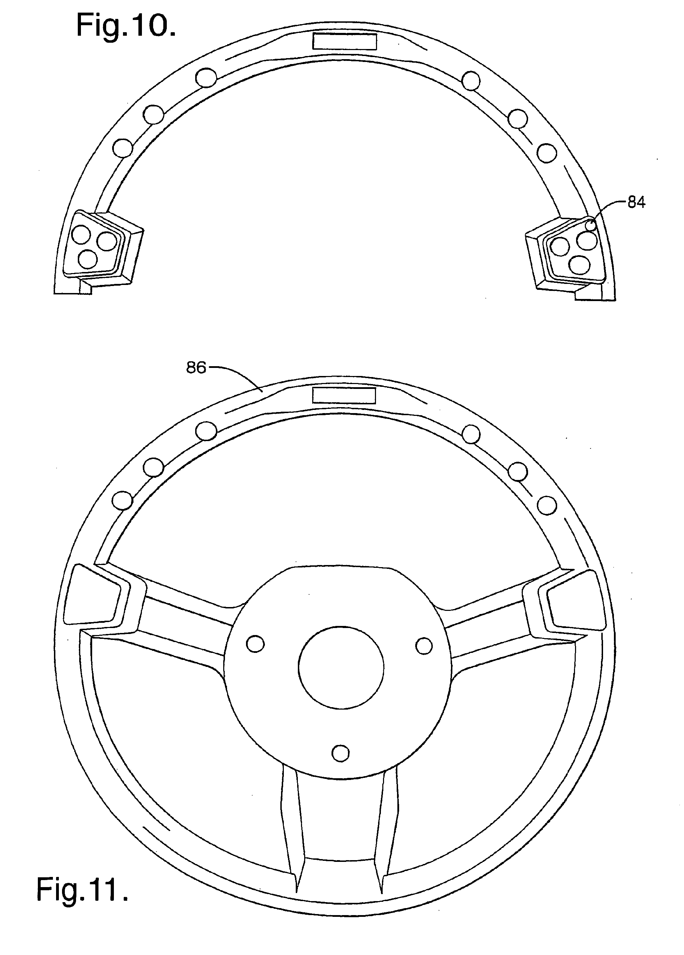

Figure 10 illustrates a possible configuration of the pushbuttons disposed on a surface of the steering wheel. As illustrated, the three buttons disposed on the left portion of the steering wheel comprise a radio button, a phone button and a climate button. Of course, the locations of the buttons and related functions may vary. On the right hand side of the steering wheel comprises three buttons for the wiper, navigation control and volume control. Again the buttons and the related functions may vary. Also illustrated in Figure 10 is an escape button 84 that in this embodiment is actuated to escape out of the system the operator is in. Escape button 84 can be disposed on either the top or bottom surface of the steering wheel.

Figure 11 illustrates the steering wheel rim insert contemplated for use in the embodiments of Figures 6-10.

Referring now to Figure 12, a schematic diagram illustrating portions of a control algorithm of an audio operating system 88 for use in any of the embodiments of the present invention is illustrated. System 88 includes a plurality of subsystems 90 that are accessed through an initial quick select button disposed on the surface of the steering wheel. In accordance with an exemplary embodiment these subsystems are accessed by initially depressing the audio pushbutton disposed on a surface of the steering wheel, which will activate the audio operating system. After the audio button is depressed the scroll switch and subsequent pushing of the audio button will assist the user in traveling through the subsystems of the audio system. Examples of this operation is illustrated by the grouping 92 of a plurality of subsystems 90. In addition, the visual display will provide visual feedback to the operator.

The visual display is provided in a location convenient for observation by a vehicle operator for example, a head up display, a video display, or a liquid crystal display or light emitting diode display disposed in the steering wheel. In addition, and in accordance with an alternative exemplary embodiment, each operating system is configured to provide an audible signal or speech recording indicating that the system has been activated. For example, upon initialization of the operating system a prerecorded message will play an audio message relating to the system just activated by depressing of the pushbutton or manipulation of a scroll switch.

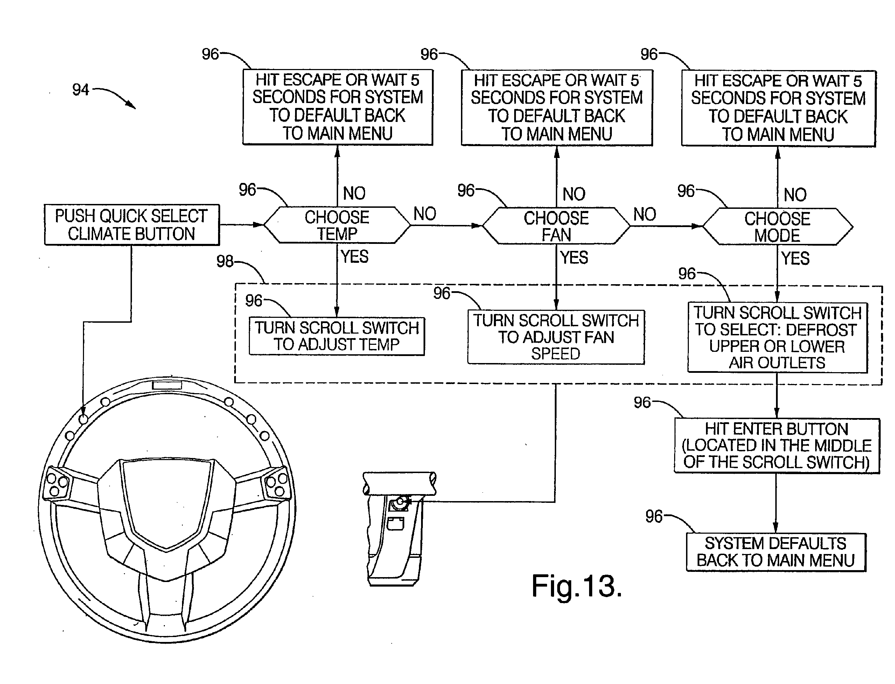

Referring now to Figure 13, a schematic diagram illustrating portions of a control algorithm of HVAC or climate control operating system 94 for use in any of the embodiments of the present invention is illustrated. System 94 includes a plurality of subsystems 96 that are accessed through an initial quick select button disposed on the surface of the steering wheel. In accordance with an exemplary embodiment these subsystems are accessed by initially depressing the related pushbutton disposed on a surface of the steering wheel, which will activate the climate control system. After the related button is depressed the scroll switch and subsequent pushing of the same button will assist the user in traveling through the subsystems of the activated system. Examples of this operation is illustrated by the grouping 98 of a plurality of subsystems 96. In addition, the visual display will provide visual feedback to the operator. In addition, and in accordance with an alternative exemplary embodiment, each operating system is configured to provide an audible signal or speech recording indicating that the system has been activated.

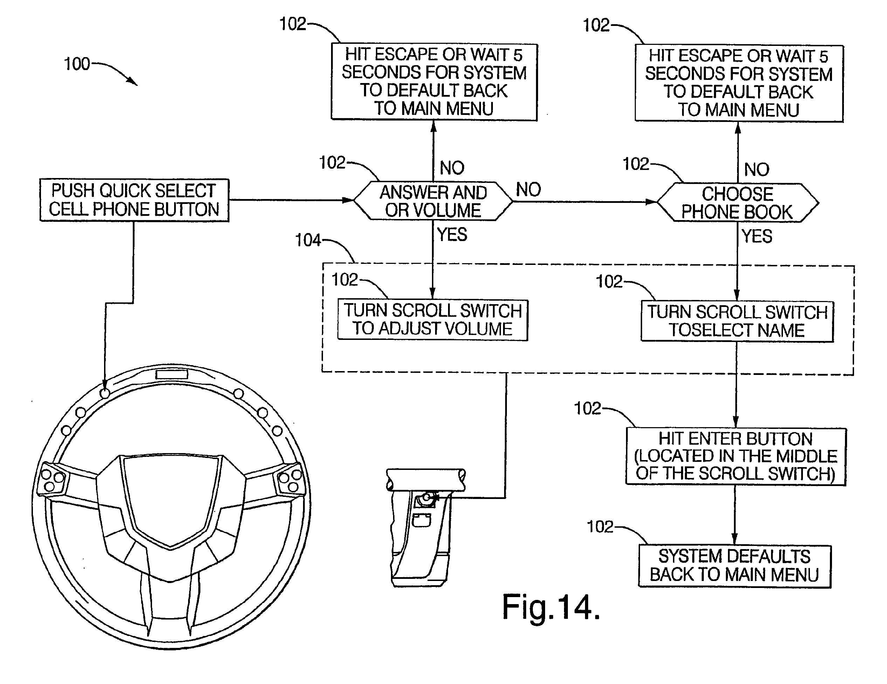

Referring now to Figure 14, a schematic diagram illustrating portions of a control algorithm of a cell phone operating system 100 for use in any of the embodiments of the present invention is illustrated. System 100 includes a plurality of subsystems or steps illustrated by boxes 102. Again boxes 102 illustrate steps of the control logic that is accessed through an initial quick select button disposed on the surface of the steering wheel. In accordance with an exemplary embodiment the logic is accessed by initially depressing the related pushbutton disposed on a surface of the steering wheel, which will activate the desired system. After the related button is depressed the scroll switch and subsequent pushing of the same button will assist the user in traveling through the subsystems or lower tier of the activated system. Examples of this operation is illustrated by the grouping 104 of a plurality of subsystems 102. Again, visual and audio feedback is available to the operator.

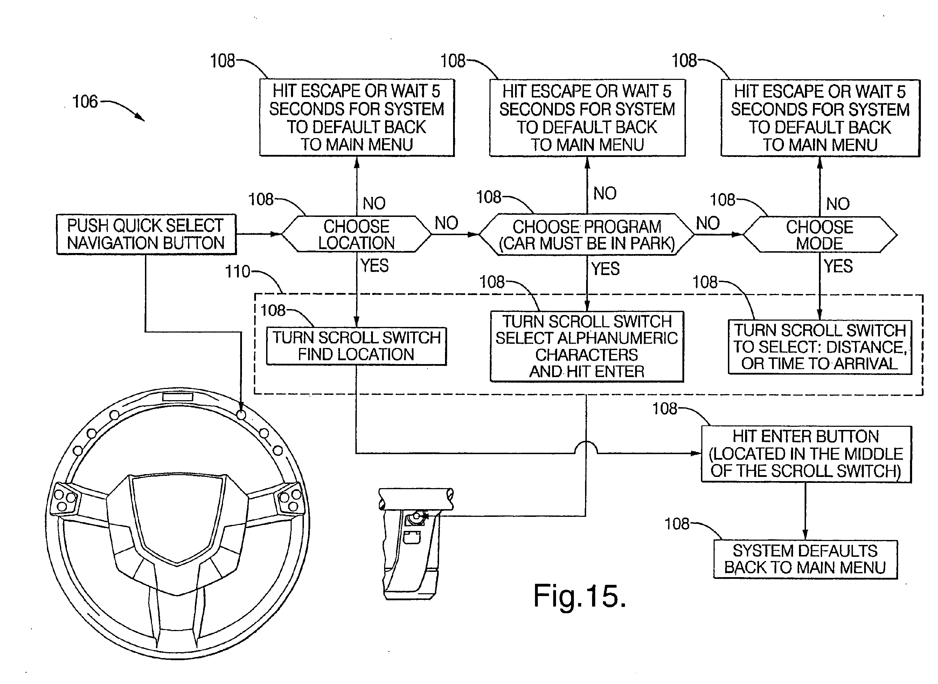

Referring now to Figure 15, a schematic diagram illustrating portions of a control algorithm or logic of a navigation system 106 for use in any of the embodiments of the present invention is illustrated. System 106 includes a plurality of subsystems or steps illustrated by boxes 108. Boxes 108 are accessed through an initial quick select button disposed on the surface of the steering wheel. In accordance with an exemplary embodiment the logic is accessed by initially depressing the related pushbutton disposed on a surface of the steering wheel, which will activate the desired system. After the related button is depressed the scroll switch and subsequent pushing of the same button will assist the user in traveling through the subsystems or lower tier of the activated system. Examples of this operation is illustrated by the grouping 110 of a plurality of subsystems or steps 108.

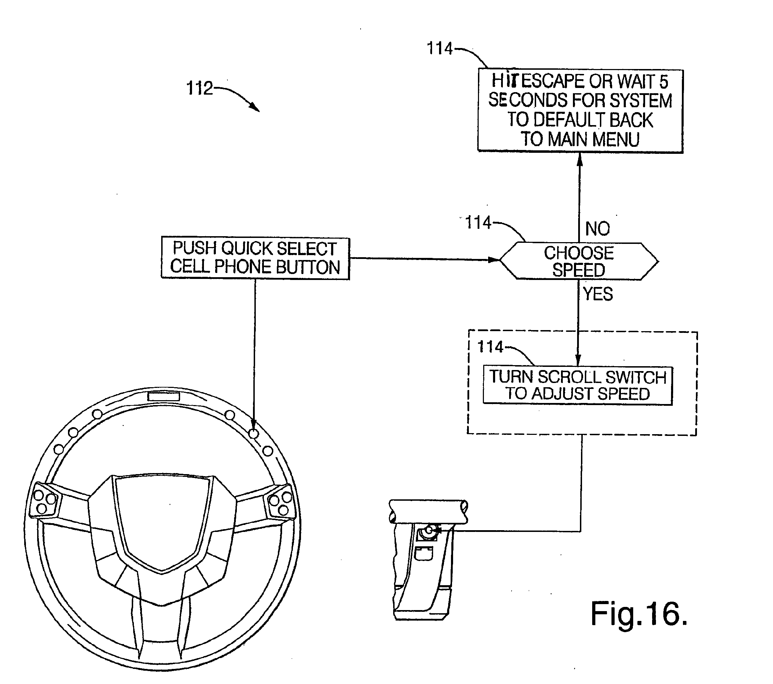

Referring now to Figure 16, a schematic diagram illustrating portions of a control algorithm or logic of an operational system 112 of the vehicle wipers for use in any of the embodiments of the present invention are illustrated. System 112 includes a plurality of subsystems or steps illustrated by boxes 114. Boxes 114 are accessed through an initial quick select button disposed on the surface the steering wheel. In accordance with an exemplary embodiment the logic is accessed by initially depressing the related pushbutton disposed on a surface of the steering wheel, which will activate the desired system. After the related button is depressed the scroll switch and subsequent pushing of the same button will assist the user in traveling through the subsystems or lower tier of the activated system. This will allow the user to modify the operational status of the system.

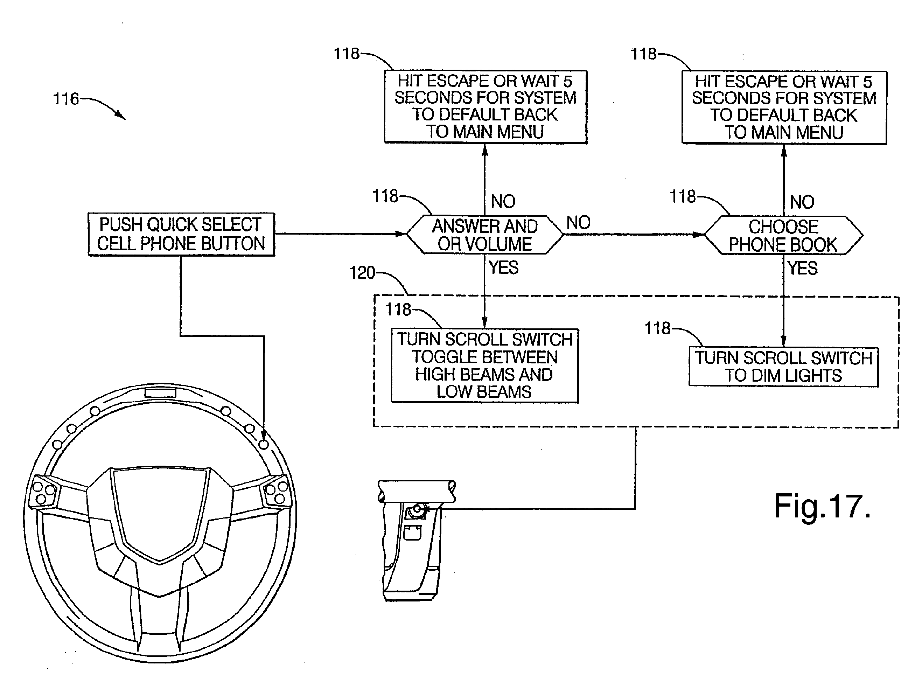

Figure 17, illustrates a schematic diagram of portions of a control algorithm or logic of an operational system 116 intended for operating the lights of the vehicle wipers. System 116 includes a plurality of subsystems or steps illustrated by boxes 118. Boxes 118 are accessed through an initial quick select button disposed on the surface of the steering wheel. In accordance with an exemplary embodiment the logic is accessed by initially depressing the related pushbutton disposed on a surface of the steering wheel, which will activate the desired system. After the related button is depressed the scroll switch and subsequent pushing of the same button will assist the user in traveling through the subsystems or lower tier of the activated system. This will allow the user to modify the operational status of the system. An example of this is illustrated by the boxes within group 120.

In accordance with exemplary embodiments any of these subsystems are accessed by initially depressing the related pushbutton disposed on a surface of the steering wheel. The depression or manipulation of the button will activate the desired system. After the related button is depressed the scroll switch and subsequent pushing of the same button will assist the user in traveling through the subsystems or lower tier of the activated system. Again, visual and audio feedback is available to the operator. It should be understood that other subsystems may be included, and those specifically disclosed herein are for illustration purposes.

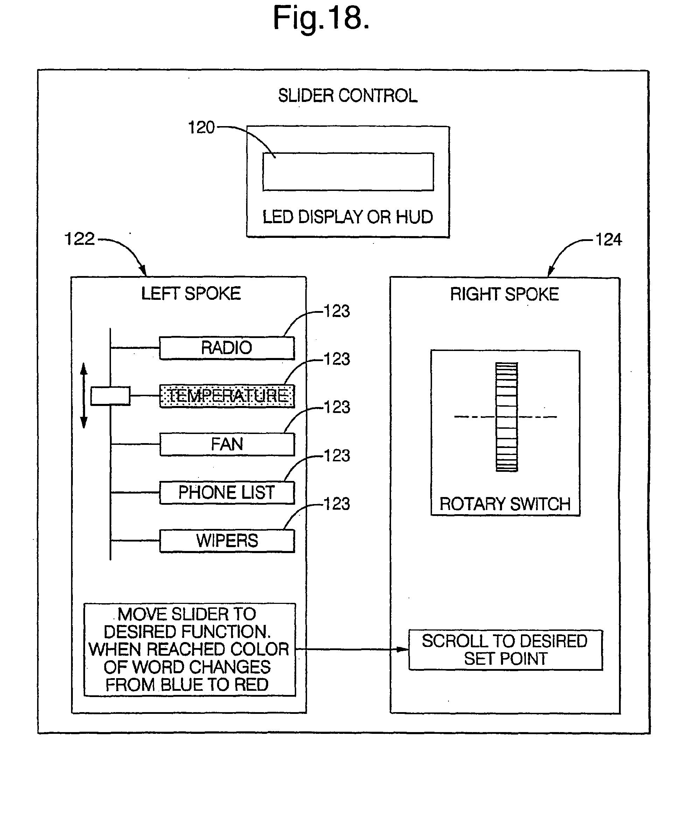

Referring now to Figure 18, an alternative exemplary embodiment of the present invention is illustrated. Here component parts performing similar or analogous functions are labeled in multiples of 100. Here control interfaces 122 and 124 are illustrated as a slide switch and a scroll switch respectively. As the slider moves to the desired function the color of the associated word (e.g., radio, temperature, fan, phone list, wipers, etc.) in an adjacent display 123 will change (e.g., from blue to red or any other color scheme to indicate activation or selection).

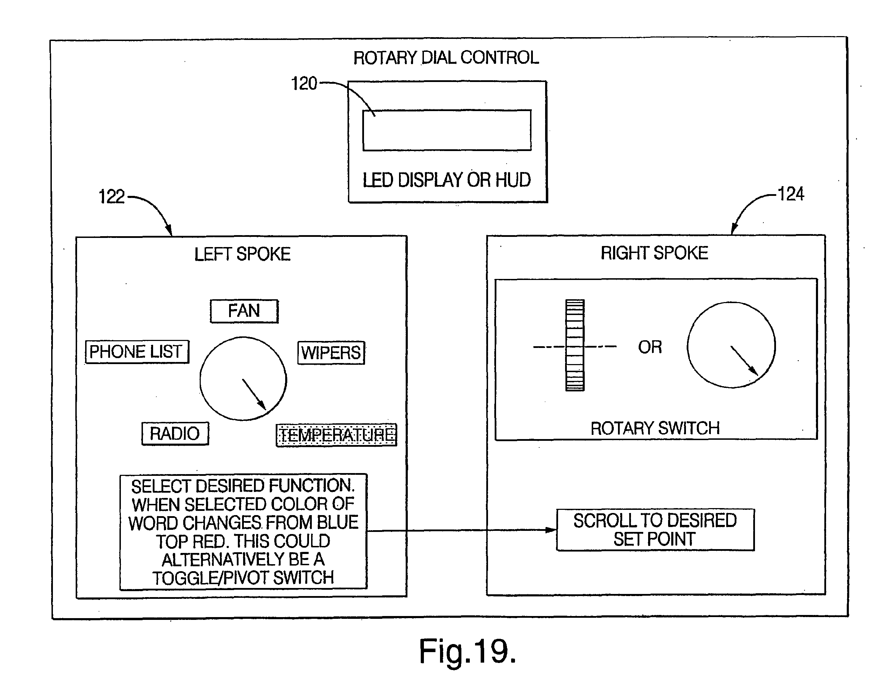

Referring now to Figure 19 another alternative exemplary embodiment of the present intention is illustrated. Here control interface 122 comprises a rotary dial control positioned for selecting each one of the groupings visually displayed about the dial of control interface 122. Similar to the Figure 18 embodiment control interface 124 is a rotary switch that can be disposed in two different planes (e.g., parallel to or orthogonal to the surface of the steering wheel).

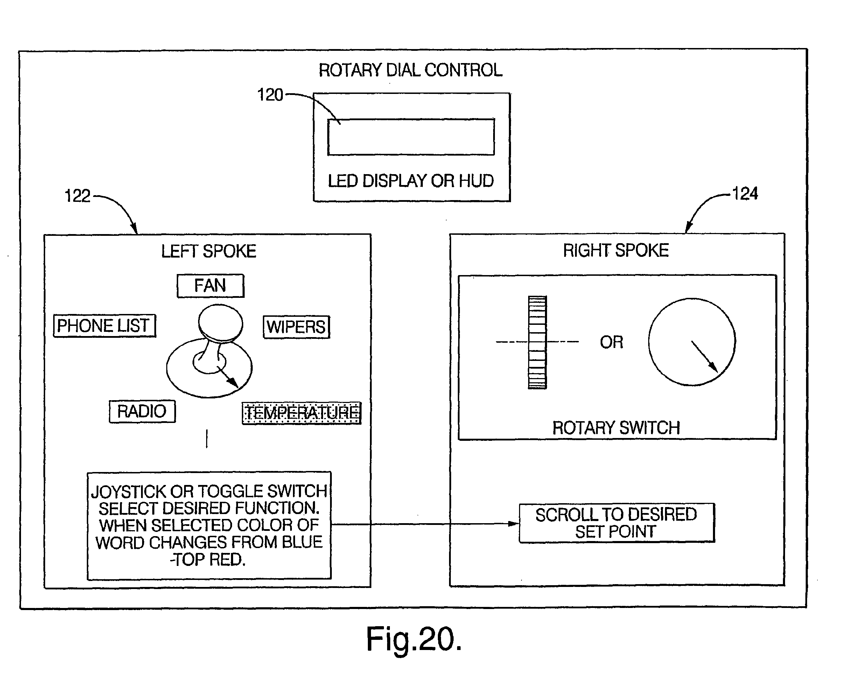

Referring now to Figure 20 yet another alternative exemplary embodiment of the present intention. Here control interface 122 comprises a joy stick or toggle switch positioned for selecting each one of the groupings visually displayed about the switch of control interface 122.

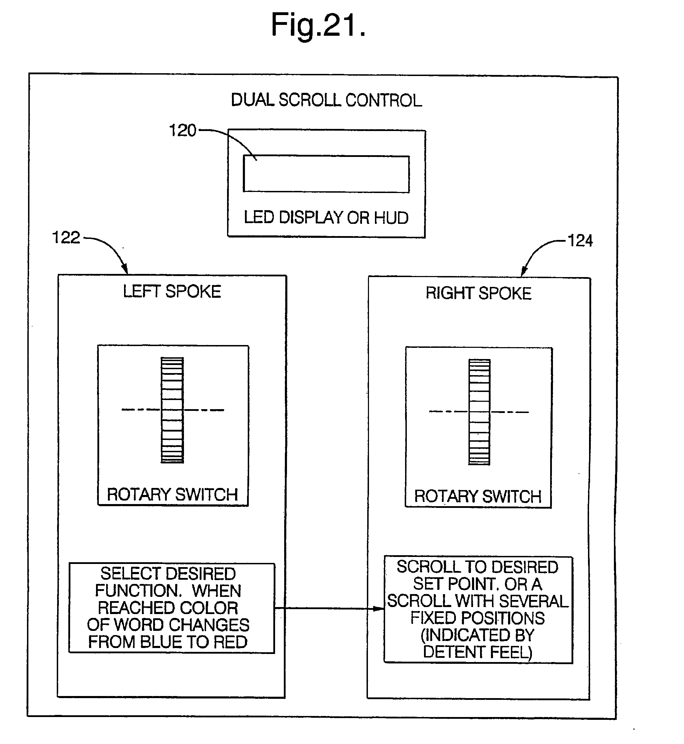

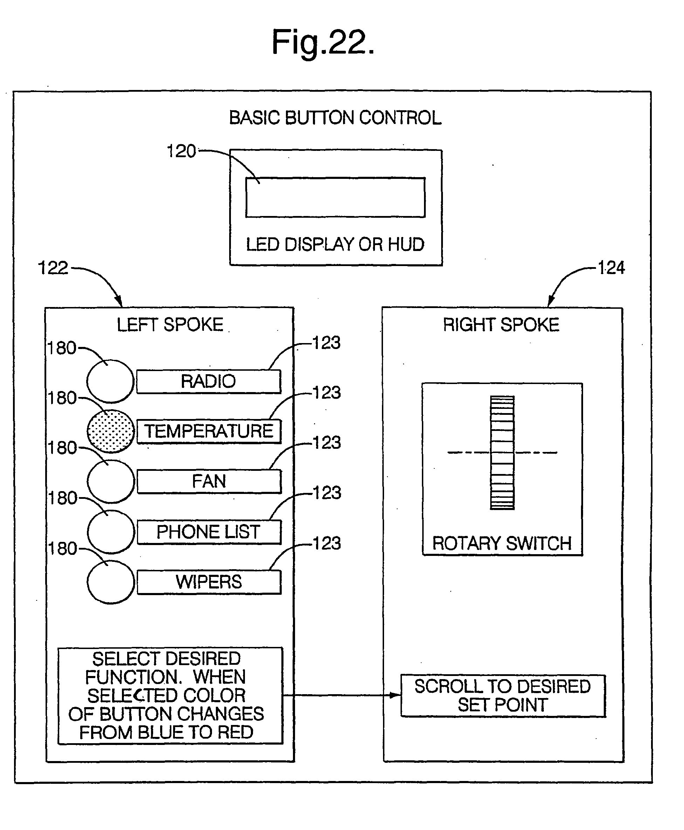

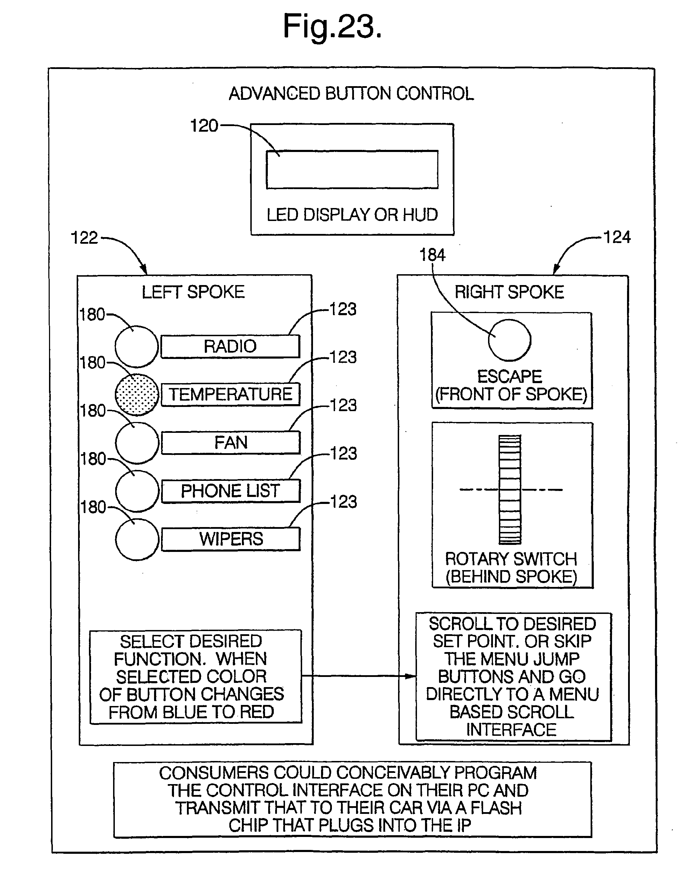

Another alternative embodiment is illustrated in Figure 21, here control interfaces 122 and 124 each comprise a rotary switch. Referring now to Figure 22, another exemplary embodiment of the present invention is illustrated. Here control interface comprises a plurality of push buttons 180 each proximate to a visual display 123 disposed on a surface of the steering wheel. Again, as in the Figure 18 embodiment the color of the visual display will change as that function is selected. In this embodiment, control interface 124 will comprise a rotary switch for manipulation after one of the buttons 180 is depressed or actuated. Referring to Figure 23 a variation of the Figure 22 embodiment is illustrated here, the system further comprises an escape switch or button 184. The escape switch or button 184 allows the operator to back out of a system or up one level by merely depressing escape switch or button 184.

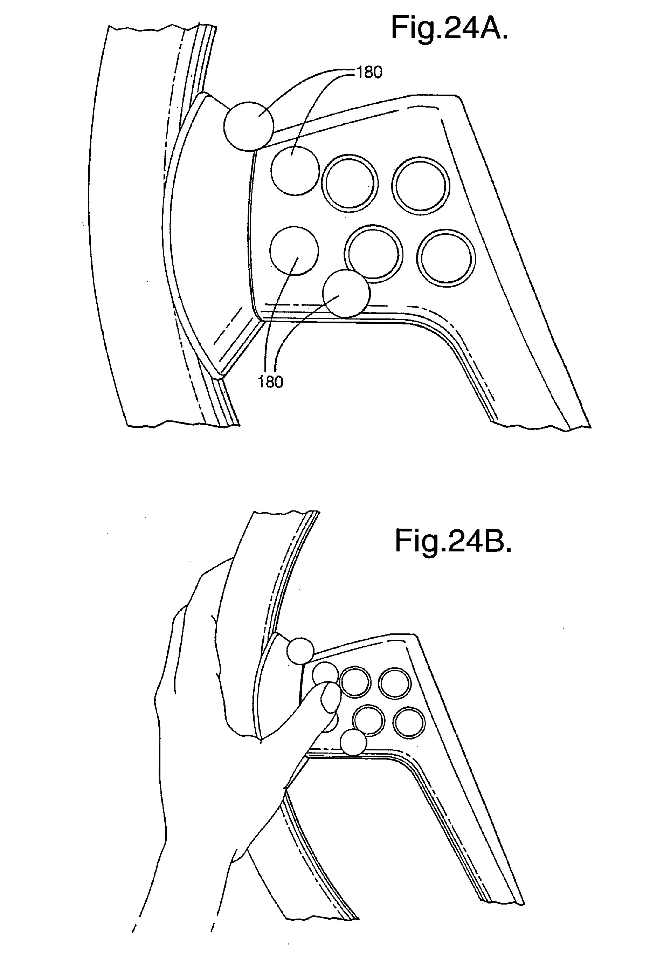

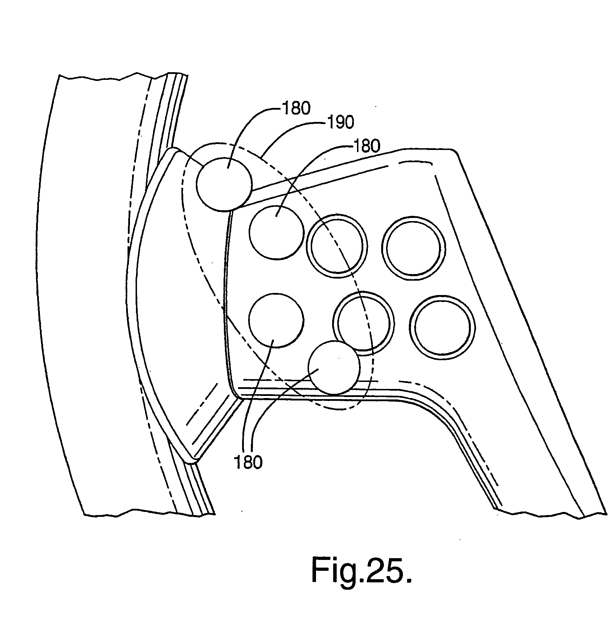

Referring now to Figures 24 and 25, another alternative exemplary embodiment of the present invention is illustrated here, placement of buttons 180 is illustrated. In one embodiment the buttons are centrally located however in an exemplary embodiment the buttons are configured into a grouping within an area 190 (illustrated in Figure 25). As illustrated in Figure 24B, the positioning of buttons 180 within grouping or area 190 allow the same to be manipulated by the thumb of a user's hand when they are grasping a portion of the steering wheel rim. Moreover, the positioning (e.g., angular positioning and distance from a point on the rim of the steering wheel) is unique in that studies have shown a mannequin's hand corresponding to the 5th-95th percentile will be able to actuate all of the buttons without having to reposition their hand when they are grasping the adjacent portion of the steering wheel. The other button illustrated e.g., not labeled 180, show alternative groupings and are illustrated to show the difference on position with respect to the buttons 180 thus, Figures 24A-25 are directed to specific locations of quick select buttons 180. In addition, this gripping configuration of buttons 180 will allow manipulation of a scroll switch disposed on the backside of the steering wheel.

As illustrated in Figure 24A, the closest edge of the highest positioned button 180 is positioned approximately 35 mm from the center of a center point 192 of the steering wheel rim. The closest edge of the next button disposed below is approximately 42 mm from center point 192. The closest edge of the next button disposed below is approximately 44 mm from center point 192 and the closest edge of the lowest buttons is approximately 62 mm from center point 192. It is of course understood that these dimensions are provided as an example of a particular example and all of the various embodiments of the present invention are not intended to be limited to the specific examples disclosed herein. It is of course understood that the number of buttons and positioning may vary furthermore the dimensions from a center point of the rim to the closest edge of the buttons may vary to including dimensions greater or less than the aforementioned dimensions.

Other preferred dimensions are also provided in a non-limiting manner: push button size, 10 mm x 10 mm minimum, 13 mm with gloves; push button clearance; 13 mm minimum edge button to center of adjacent button actuation area, 19 mm center of button to center of adjacent button actuation area, 20 mm minimum center of button to any obstructing surface. Labeling or visual display 3 mm minimum character height.

Furthermore, by positioning the quick selected buttons within area 190 the location is optimized in order to accommodate users of varying size (e.g., large handed individuals and small handed individuals and all individuals therebetween). This allows them to manipulate the quick selected buttons with their thumbs without having to reposition their grip on the steering wheel.

Although Figures 24A- 25 only illustrate a left side of the steering wheel it is of course understood that this arrangement may be provided on the right side of the steering wheel. Moreover, and since the control interfaces of exemplary embodiments of the present invention are interchangeable both left-handed and right -handed users may use the same vehicle and the control interfaces may be repositioned according to the driver's or user's preference. In addition, is also understood that although Figures 24A-25 only illustrate four quick selected buttons the number of buttons used in any of the aforementioned exemplary embodiments may vary.

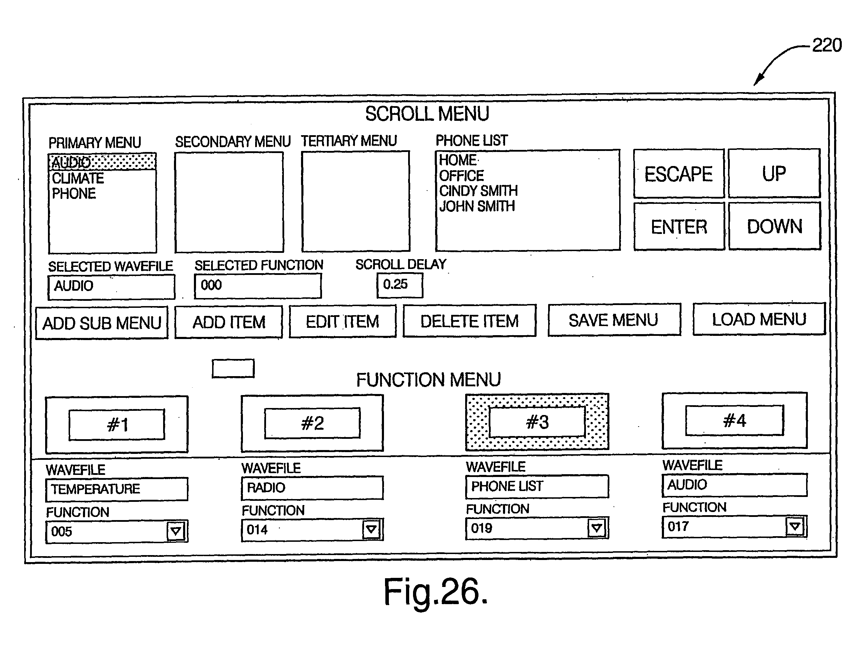

As discussed above, an embodiment of the present invention allows the vehicle operator or owner to program the desired functions of the quick selected buttons disposed on the surface of the steering wheel as well as the operation of a scroll switch if used in conjunction with one of the aforementioned embodiments. One advantageous way of allowing an individual to preprogram their quick selected buttons in accordance with an exemplary embodiment of the present invention is to provide computer software that is installed on a home personal computer or other equivalent device that is capable of receiving a medium of machine-readable language and capable of receiving inputs as well as providing a graphic user interface. Figure 26 illustrates one example of a scroll menu or control interface menu 220 for assisting a user to personalize the quick select buttons of the control interfaces.

As illustrated, menu 220 allows the user to create a data file corresponding to their preferred configuration of the quick select buttons of any one of the aforementioned embodiments of the present invention. Once the data file is created, the user simply uploads the data into the vehicle system via a memory flash card that is configured to interface with an input portal positioned within the vehicle or alternatively the data may be downloaded using telematics. This feature will allow the system to be configurable by each individual user moreover, the system can be provided with a password to prevent the changing of a default or primary program associated with the control interfaces. In addition, the system will be provided with a default configuration that would be implemented in the event of corruption of a personalized configuration.

For example, a user may prefer certain buttons for quick selection of components or subsystems of the vehicle (e.g., audio, radio, navigation, wipers, chronic control, communications, cruise control, signals etc.). Thus, an exemplary embodiment of the present invention allows the user to program the selected functions of the control interfaces. Moreover, and in the embodiments which provide audio feedback the user may record their own place for playback when the quick select buttons are actuated. Furthermore, information from other electronic devices such as personal data assistants, cellphones or other wireless devices, that include forms of communication as well as directories of information including e-mail addresses and phone numbers is capable of being uploaded into the system such that a vehicle with a complementary communications device that is accessed by one of the quick select buttons is capable of using any of this data.

In accordance with exemplary embodiments of the present invention computers and/or equivalent devices are used to generate the usable databases, control interface configurations and related control algorithms for responding to inputs received. One device is resident within the vehicle and if necessary another remote device is used to build the databases (e.g., user configured). The computers and/or equivalent devices comprise among other elements a microprocessor, read only memory in the form of an electronic storage medium for executable programs or algorithms and calibration values or constants, random access memory and data buses for allowing the necessary communications (e.g., input, output and within the microprocessor) in accordance with known technologies. For example one microprocessor and necessary hardware will be resident in the vehicle wherein the control systems of exemplary embodiments of the present invention will be implemented.

It is understood that the processing of the above description may be implemented by a controller operating in response to a computer program, in order to perform the prescribed functions and desired processing, as well as the computations therefore, the controller may include, but not be limited to, a processor(s), computer(s), memory, storage, register(s), timing, interrupt(s), communication interfaces, and input/output signal interfaces, as well as combinations comprising at least one of the foregoing.

As described above, the algorithms for implementing exemplary embodiments of the present invention can be embodied in the form of computer-implemented processes and apparatuses for practicing those processes. The algorithms can also be embodied in the form of computer program code containing instructions embodied in tangible media, such as floppy diskettes, CD-ROMs, hard drives, or any other computer-readable storage medium, wherein, when the computer program code is loaded into and executed by a computer and/or controller, the computer becomes an apparatus for practicing the invention. Existing systems having reprogrammable storage (e.g., flash memory) that can be updated to implement various aspects of command code, the algorithms can also be embodied in the form of computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into and executed by a computer. When implemented on a general-purpose microprocessor, the computer program code segments configure the microprocessor to create specific logic circuits.

These instructions may reside, for example, in RAM of the computer. Alternatively, the instructions may be contained on a data storage device with a computer readable medium, such as a computer diskette. Or, the instructions may be stored on a magnetic tape, conventional hard disk drive,
electronic read-only memory, optical storage device, or other appropriate data storage device. In an illustrative embodiment of the invention, the computer-executable instructions may be lines of compiled C++ compatible code.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method for activating and providing inputs to a plurality of control systems in a vehicle, comprising:
providing a plurality of discrete selector switches (180) for selecting a discrete control algorithm of a system of the vehicle, said plurality of discrete selector switches being disposed on a surface of a steering wheel (16) within an area wherein each of said plurality of discrete selector switches may be manipulated by a user gripping the steering wheel (16) with at least one hand at a first gripping configuration wherein the at least one hand does not have to be repositioned to be able to manipulate each of said plurality of discrete selector switches;
providing a visual display (20), said visual display indicating which control algorithm has been selected by one of said plurality of discrete selectors switches; and
providing a scroll switch (82) on a surface of the steering wheel wherein rotation of the scroll switch provides an input into the control algorithm selected by one of said plurality of discrete selector switches, said input modifying an operational status of a device controlled by the selected control algorithm, said scroll switch being located so that said scroll switch may be manipulated by the at least one hand from said first gripping configuration.

2. The method as in claim 1, wherein the visual display is in the rim of the steering wheel (16).

3. The method as in claim 1, wherein said plurality of discrete selector switches are positioned in a spoke (56) of the steering wheel.

4. The method as in claim 3, wherein a discrete control algorithm is selected for receiving an input from said scroll switch (46) by depressing one of said plurality of discrete selector switches (48, 50) once.

5. The method as in claim 4, wherein another discrete control algorithm is selected for receiving an input from said scroll switch by depressing the same one of said plurality of discrete selector switches again.

6. The method as in claim 5, wherein said discrete control algorithm and said another discrete control algorithm control a single device of the vehicle and said discrete algorithm is unselected if no further input is received within a predetermined time period.

7. The method as in claim 6, wherein said single device is selected from the group comprising: climate control, cruise control, radio, compact disc, cassette tape, navigational system and cellular phone.

8. The method as in claim 1, wherein said area is defined by an ellipse.

9. The method as in claim 1, wherein said visual display provides indicia that moves from left to right across said visual display.

10. A multiple input control interface (18) for accessing and modifying a plurality of systems of a vehicle, comprising:
a first control interface (22) disposed on a surface of a steering wheel (16);
a second control interface (24) disposed on a surface of said steering wheel, said second control interface being positioned remote from said first control interface;
a visual display (20) disposed within a rim portion (54) of said steering wheel, wherein said first control interface provides access to a vehicle system and said second control interface provides a means for modifying the state of the vehicle system accessed by said first control interface and said visual display indicates which vehicle system has been accessed and modified; and
a remote control (60), said remote control comprising a first remote control interface disposed on a surface of said remote control;
a second remote control interface disposed on a surface of said remote control, wherein said first remote control interface provides access to a vehicle system and said second remote control interface provides a means for modifying the state of the vehicle system accessed by said first remote control interface and said visual display indicates which vehicle system has been accessed.

11. The control interface as in claim 10, wherein said visual display is positioned on a surface of an instrument panel (14) of the vehicle.

12. A control interface (18) for accessing a plurality of systems of a vehicle, comprising:
a first control interface (22) disposed on a surface of a steering wheel (16);
a second control interface (24) disposed on a surface of said steering wheel, said second control interface being positioned remote from said first control interface; and
a visual display (20)disposed within a rim portion (54) of said steering wheel, wherein said first control interface provides access to a vehicle system and said second control interface provides a means for modifying the state of the vehicle system accessed by said first control interface and said visual display indicates which vehicle system has been accessed and modified.

13. The control interface as in claim 12, wherein said first control interface (22) comprises a plurality of buttons (26, 28, 30, 32, 34) positioned on a surface of said steering wheel, said plurality of buttons being located proximate to a rim portion of the steering wheel such that they are easily actuated.

14. The control interface as in claim 13, wherein each of said plurality of buttons activates a control algorithm of a vehicle system and said second control interface provides a means for varying an operational aspect of the vehicle system selected by said plurality of buttons of said first control interface.

15. The control interface as in claim 14, wherein said first control interface is disposed proximate to the location of a vehicle operator's left hand and said second control interface is disposed proximate to the location of the vehicle operators right hand when said steering wheel is in a position corresponding to the vehicle traveling in a substantially straight direction.

16. The control interface as in claim 14, wherein said vehicle system is selected from the group comprising: climate control, audio control, communications control, navigation control, cruise control, wiper control and directional control.

17. The control interface as in claim 14, wherein said second control interface is a scroll switch (182) wherein rotation of said scroll switch provides said means for varying said operational aspect of the vehicle system selected by said plurality of buttons of said first control interface.

18. The control interface as in claim 14, wherein said visual display is disposed within a top portion of said steering wheel.

19. The control interface as in claim 18, wherein said visual display comprises a liquid crystal display or a plurality of light emitting diodes.

20. The control interface as in claim 14, wherein said first control interface is interchangeable with said second control interface and the functions of each of said plurality of buttons is capable of being modified by uploading a medium of machine-readable data to an operating system of the control interface.

21. The control interface as in claim 18, wherein said plurality of buttons are disposed within an upper surface of said rim and said second control interface is a scroll switch (82) disposed on a lower portion of said steering wheel (16), wherein rotation and said scroll switch (82) provides said means for varying said operational aspect of the vehicle system selected by said plurality of buttons.

22. The control interface as in claim 18, wherein said plurality of buttons are disposed within an upper surface of said rim, at least one spoke (56) of said steering wheel and an upper surface of an airbag module secured to said steering wheel and said second control interface is a scroll switch (82) disposed on a lower portion of said steering wheel, wherein rotation of said scroll switch provides said means for varying said operational aspect of the vehicle system selected by said plurality of buttons.

23. The control interface as in claim 14, wherein said second control interface is a rocker switch (64) located on a surface of said steering wheel wherein manipulation of said rocker switch provides said means for varying said operational aspect of the vehicle system selected by said plurality of buttons of said first control interface.

24. A steering wheel (16) for a vehicle, comprising:
a first control interface (22) for accessing a plurality of vehicle subsystems;
a second control interface (24) for modifying one of said plurality of vehicle subsystems after they are accessed by said first control interface; and
a visual display (20) for indicating which one of said plurality of vehicle subsystems has been accessed by said first control interface (22), wherein said visual display (20) is located within a rim of a steering wheel (54).

25. A method for activating and providing inputs to a plurality of control systems in a vehicle, comprising:
providing a plurality of discrete selector switches (26, 28, 30, 32, 34) for selecting a discrete control algorithm of a system of the vehicle, said plurality of discrete selector switches (26, 28, 30, 32, 34) being disposed on a surface of a steering wheel (16);
providing a visual display (20) in a portion of a rim (54) of the steering wheel of the vehicle, said visual display indicating which control algorithm has been selected by one of said plurality of discrete selectors switches; and
providing a means on a surface of the steering wheel (16) for providing an input into the control algorithm selected by one of said plurality of discrete selector switches, said input modifying an operational status of a device controlled by the selected control algorithm.

26. The method as in claim 25, wherein various levels of a control algorithm are attainable by said plurality of discrete selector switches depending upon the number of times one of said plurality of discrete selector switches is manipulated.

27. The method as in claim 25, wherein the control algorithm associated with each of said plurality of discrete selector switches is capable of being changed by providing an input to another switch disposed on a surface.

28. The method as in claim 25, wherein the control algorithm associated with each of said plurality of discrete selector switches is capable of being changed by providing a medium of machine readable data to an operating system of the vehicle.

29. The method as in claim 25, further comprising:
providing an audible message as each discrete selectors switch is manipulated.

30. The method as in claim 29, further comprising:
providing a de-selector switch (84) on a surface of the steering wheel for un-selecting a selected control algorithm.

31. A method for providing a user interface between a plurality of vehicle systems of a vehicle, each of said plurality of vehicle systems having a plurality of operational states, the method comprising:
providing a first control interface (22) disposed on a surface of a steering wheel (16), said first control interface having a plurality of discrete selector switches (26, 28, 30, 32, 34) for selecting a discrete control algorithm of one of the plurality of vehicle systems, said plurality of discrete selector switches being disposed on a surface of the steering wheel;
providing a second control interface (24) on a surface of the steering wheel (16), said second control interface (24) providing an input into the control algorithm selected by one of said plurality of discrete selector switches, said input modifying an operational status of a device controlled by the selected control algorithm; and
providing a visual display (20) in a portion of a rim (54) of the steering wheel (16) of the vehicle, said visual display indicating which control algorithm has been selected by one of said plurality of discrete selectors switches.

32. The method as in claim 31, wherein the discrete control algorithm controlled by each of said plurality of discrete selector switches is capable of being reconfigured to another one of said plurality of discrete selector switches by providing a medium of machine readable data to a control system of the vehicle.

33. The method as in claim 32, further comprising:
providing a remote control for remote operation of said first control interface and said second control interface, wherein said remote control has a visual display for indicating which vehicle system has been accessed and said remote control is configured to only access vehicle systems not related to the operation of the vehicle.

34. The method as in claim 32, wherein said plurality of vehicle systems is selected from the group comprising: climate control, audio control, communications control, navigation control, cruise control, adaptive cruise control, wiper control, seat positioning control, remote mirror control and directional control.

35. The method as in claim 34, further comprising:
vibrating a portion of said steering wheel when an incoming telephone call is received by the control algorithm corresponding to communications control.

36. The method as in claim 34, further comprising:
vibrating a portion of said steering wheel when a signal indicative of a vehicle within a predetermined range is received by the control algorithm corresponding to adaptive cruise control.

37. The method as in claim 34, wherein each of said plurality of discrete selector switches is provided with a source of illumination and said source of illumination varied to provide a visual indication when either a signal indicative of a vehicle within a predetermined range is received by the control algorithm corresponding to adaptive cruise control of an incoming telephone call is received by the control algorithm corresponding to communications control.

38. The method as in claim 31, further comprising:
providing machine readable data to a transportable storage medium, said machine readable data corresponding to vehicle operational status as well as the discrete control algorithm associated with each of said plurality of discrete selector switches.

39. The method as in claim 38, wherein said transportable storage medium is capable of receiving data for reconfiguring the functions on said first control interface, said second control interface and said visual display.

40. The method as in claim 31, wherein said plurality of discrete selector switches only serve to provide access to a functional control mode of the selected control algorithm, wherein further input for modifying the operational status of the device controlled by the selected control algorithm must be made by the second control interface.

41. The method as in claim 40, further comprising:
returning to a default mode when said first control interface is manipulated and no further input is received after a predetermined time.

42. The method as in claim 31, wherein manipulation of said second control interface after selection of one of said plurality of discrete control algorithms causes each of said plurality of discrete selector switches to provide a specific input into the selected control algorithm.

43. The method as in claim 42, further comprising:
returning to a default mode when no further input is received after a predetermined time.

44. The method as in claim 31, wherein said plurality of discrete selector switches are disposed about the periphery of a rim (54) of said steering wheel and said visual display is located in a top portion of said rim between said plurality of discrete selector switches.
